# FASCICULE DE BREVET EUROPEEN

(11) **EP 2 114 549 B1**
(45) Date de publication et mention de la délivrance du brevet: **14.09.2016**
(21) Numéro de dépôt: 08761922.7
(22) Date de dépôt: 10.01.2008
(51) Int. Cl.: B01D 53/04

(54) **PURIFICATION D'UN MELANGE H2/CO AVEC CONTROLE AVANCE DU RECHAUFFEUR DE REGENERATION**
REINIGUNG EINER H2/CO-MISCHUNG MIT FÜHRUNGSSTEUERUNG DES REGENERATIONSHEIZERS
PURIFICATION OF A H2/CO MIXTURE WITH LEAD CONTROL OF THE REGENERATION HEATER

(30) Priorité: 17.01.2007 FR 0752726
(43) Date de publication de la demande: 11.11.2009
(73) Titulaire: L'AIR LIQUIDE, Société Anonyme pour l'Etude et l'Exploitation des Procédés Georges Claude, 75007 Paris (FR)
(72) Inventeur: MONEREAU, Christian, F-75011 Paris (FR); RODRIGUES, Guillaume, 78280 Guyancourt (FR); BELLEC, Ingrid, F-91360 Epinay Sur Orge (FR); DEMOISY, François, B-1450 Chastre (BE)
(74) Mandataire: Conan, Philippe Claude
(86) Numéro de dépôt international: PCT/FR2008/050049
(87) Numéro de publication internationale: WO 2008/099108

(56) Documents cités:
- EP-A2- 0 862 937
- WO-A-2006/034765
- FR-A1- 2 805 531
- FR-A1- 2 856 607
- US-A- 4 233 038
- US-A- 5 897 686

## Description

L'invention porte sur un procédé d'épuration par adsorption d'un mélange gazeux riche en hydrogène et en monoxyde de carbone, couramment appelé mélange H₂/CO ou gaz de synthèse, avant son traitement par voie cryogénique en vue de produire une fraction riche en CO, et/ou un ou des mélanges H₂/CO de teneur déterminée, tel par exemple un mélange 50% mole H2 / 50% mole CO et généralement une fraction riche en hydrogène.

Plus précisément, l'invention porte sur les conditions de fonctionnement du réchauffeur de gaz de régénération associé à une telle unité ou d'un réchauffeur présentant les mêmes caractéristiques quant au niveau de température et aux fluides mis enjeu.

Les mélanges de type gaz de synthèse peuvent être obtenus de plusieurs manières, notamment :
- par reformage à la vapeur ou au CO₂,
- par oxydation partielle,
- par des procédés mixtes, tel que le procédé ATR (Auto Thermal Reforming= reformage auto-thermique) qui est une combinaison du reformage à la vapeur et de l'oxydation partielle, à partir de gaz, tels que le méthane ou l'éthane,
- par gazéification du charbon,
- ou récupérés comme gaz résiduaires en aval d'unités de fabrication d'acétylène.

Outre l'hydrogène et le monoxyde de carbone en tant que composés principaux, de nombreuses impuretés comme le dioxyde de carbone, l'eau ou le méthanol font souvent partie des gaz de synthèse.

Parmi les procédés d'épuration, le procédé de type TSA (Temperature Swing Adsorption = adsorption avec variation de température) est un procédé cyclique dans lequel chacun des adsorbeurs alternent des étapes d'adsorption au cours desquelles les impuretés sont retenues dans l'adsorbant et des étapes de régénération au cours desquelles on utilise en particulier une phase de chauffage pour extraire les impuretés de l'adsorbant. Ce chauffage est généralement effectué au moyen d'un gaz dit gaz de régénération issu du traitement par voie cryogénique, c'est-à-dire dans ce cas, une fraction riche en hydrogène, un gaz résiduaire, un mélange des deux ou une fraction du gaz de synthèse épuré. Dans tous ces cas, le gaz de régénération contient à la fois de l'hydrogène, du monoxyde de carbone, et du méthane mais dans des proportions diverses. Il est aussi généralement utilisé pour refroidir ensuite la masse adsorbante jusqu'à sa température d'adsorption.

Le cycle de fonctionnement typique de ce type d'unité est décrit dans le document WO-A-03/049839.

Les unités des procédés d'épuration de type TSA sont généralement dimensionnées de façon à obtenir un gaz de synthèse de qualité cryogénique, c'est à dire telle que, lors du refroidissement du dit gaz de synthèse dans la boite froide, les dépôts éventuels d'impuretés soient suffisamment faibles pour assurer un fonctionnement satisfaisant de la dite boite froide pendant plusieurs années, donc sans bouchage, ni détérioration thermique de la ligne d'échange et sans risque pour la sécurité des équipements.

Cela se traduit par une teneur résiduelle en CO₂ généralement de l'ordre de 0,1 ppm mole maximum et par des teneurs encore plus basses au niveau des ppb mole pour les autres impuretés.

Afin de limiter les interventions sur ces unités d'épuration, elles sont aussi dimensionnées avec suffisamment de marges initiales pour assurer un fonctionnement correct pendant plusieurs années sans avoir à remplacer les adsorbants.

Malgré toutes les précautions, il est apparu que la durée de vie de ces unités était sensiblement moins longue que prévu initialement.

En fonctionnement normal, un analyseur de CO₂ permet de s'assurer de la pureté du gaz produit. Il permet de modifier le cycle, par exemple de raccourcir la phase d'adsorption, si l'on détecte des percées en CO₂ prématurées liées à une dégradation des performances de l'unité de purification telle que mentionnée précédemment. Il n'en demeure pas moins que malgré ces précautions, on constate après quelques années de fonctionnement, une dégradation des performances de séparation de la boite froide assurant la séparation cryogénique du gaz de synthèse.

Ce manque de performances est attribué à une dégradation des échanges thermiques par dépôt solide sur les plaques des échangeurs.

Un arrêt de l'unité et son réchauffement (dégivrage) permet de résoudre le problème mais a bien sûr un coût important s'il ne s'agit pas d'un arrêt programmé à l'avance, puisqu'il engendre un arrêt obligatoire de l'unité, donc de la production.

Compte tenu des marges de sécurité sur les échangeurs prises lors de la conception des boîtes froides, ces effets ne se font sentir qu'après une durée de fonctionnement relativement longue, supérieure à l'année, plus généralement de l'ordre de 2 ou 3 ans. Ceci ne permet donc pas de savoir si l'entraînement de traces d'impuretés par le gaz de synthèse épuré, à priori d'eau et de CO₂, vers la boite froide se produit après plus d'un an de service, après plusieurs mois ou seulement quelques semaines de fonctionnement.

Il a été rapporté que cette dégradation provenait des réactions chimiques entre l'adsorbant et l'adsorbat et/ou des réactions entre les composants du gaz de synthèse favorisées par l'adsorbant.

La réactivité des mélanges H₂/CO est effectivement bien connue à haute température. Ainsi, le document US-A-5,897,686 enseigne que plusieurs réactions se produisent lors de la phase de repressuration de l'épuration, qui est une sous-étape de la régénération. Il y est fait mention notamment des deux réactions :
- la méthanation :

   CO + 3H₂ → CH₄ + H₂O
- la réaction de Boudouard :

   2 CO → C + CO₂

D'après ce document, le problème rencontré est lié à la formation d'eau dans l'adsorbant et la solution préconisée est d'adjoindre en tête d'adsorbeur un lit de tamis 3A qui n'adsorbant pas de CO évite la formation in-situ de l'eau. Ce document préconise une température de régénération comprise entre 100°C et 400°C ce qui correspond classiquement à une température de peau du réchauffeur de l'ordre de 150/200°C à 450/500°C.

Certaines réactions chimiques peuvent être également catalysées par des dépôts de constituants secondaires à la surface des adsorbants. Des dépôts de métaux tels que le fer, le nickel, le cuivre... facilitent les réactions citées plus haut. Pour certains d'entre eux, leur origine est due à la décomposition de métal-carbonyls formés à l'amont de l'épuration.

Un empoissonnement progressif des adsorbants par des traces d'impuretés non ou mal régénérables est également une hypothèse plausible, connaissant le nombre très élevé de produits de réactions secondaires pouvant être produits dans les réacteurs de synthèse, provenir du charbon ou du gaz naturel utilisé comme matière première, ou être entraînés des procédés de pré-purification amont, tels que le lavage au méthanol ou le lavage aux amines.

Le document WO-A-2006/034765 décrit un procédé de purification d'un flux de gaz riche en monoxyde de carbone et en hydrogène, dans lequel on met le flux de gaz en contact avec une couche d'adsorption contenant un gel de silice et on régénère la couche d'adsorption avec un gaz dont la température est comprise entre 70°C et 150°C, ce qui correspond à une température de peau du réchauffeur de l'ordre de 150°C à 200/250°C.

La température de peau du réchauffeur est définie comme étant la température à laquelle est soumis le gaz de régénération en traversant le réchauffeur. Elle est normalement maintenue constante pendant toute la durée du cycle de pression pour limiter les chocs thermiques au niveau de l'échangeur. Dans le cas le plus général qui consiste à utiliser de la vapeur comme moyen de chauffage, on maintient l'alimentation en vapeur ouverte sur l'échangeur. Lorsque le gaz de régénération ne circule plus dans l'échangeur, le gradient de température à travers la surface d'échange devient pratiquement nul et la température de peau devient en pratique très proche de la température de condensation de la vapeur. On peut la considérer égale à cette même température. En fonctionnement normal, c'est-à-dire en période de chauffage, le gradient de température à travers la surface d'échange n'est pas nul mais reste du deuxième ordre par rapport au gradient total entre la température de la vapeur et la température au sein du gaz à réchauffer. On peut alors également assimiler la température de peau à la température de condensation de la vapeur. On utilise généralement des vapeurs d'eau à saturation ou faiblement surchauffée. Même dans les cas où la vapeur est plus largement surchauffée, par exemple où sa température de mise à disposition est supérieure de 50°C à sa température de condensation, l'essentiel de l'échange de chaleur se fait avec une température de peau voisine de la dite température de condensation.

Il est connu, par ailleurs que pour une puissance thermique donnée (Q), la surface d'échange à installer (S) est inversement proportionnelle à l'écart de température ΔT entre la température de peau de la surface chauffante et la température du gaz de régénération en contact avec la surface d'échange.

De là, on comprend aisément que pour réduire la surface d'échange nécessaire, et par là l'investissement, il est nécessaire d'utiliser une température de peau T₁ aussi élevée que possible. Par exemple, dans une raffinerie, une usine chimique ou pétrochimique, pour réchauffer un fluide à une température de 170°C, il est classique d'utiliser des vapeurs à 250/300°C voire plus.

Malgré toutes ces hypothèses d'empoisonnement, la raison principale d'introduction d'impuretés dans la boîte froide n'a pas encore été clairement identifiée.

Néanmoins, un des problèmes qui se posent est de fournir un gaz de synthèse de qualité cryogénique sans avoir à intervenir prématurément sur les unités d'épuration et/ou sur la boite froide en proposant un procédé efficace destiné à purifier un mélange H₂/CO contenant au moins une impureté, de sorte d'éviter ou de minimiser les réactions parasites.

La solution de l'invention est alors un procédé de purification ou de séparation d'un flux de gaz d'alimentation contenant au moins une impureté, dans lequel périodiquement :
a) on met en contact ledit flux de gaz d'alimentation avec un premier adsorbant pour éliminer par adsorption au moins ladite impureté,
b) on récupère ledit gaz purifié ou séparé,
c) on chauffe un gaz de régénération contenant au moins de l'hydrogène (H₂) et du monoxyde de carbone (CO) au moyen d'un réchauffeur dont la température de peau T₂ est supérieure à 150°C,
d) on régénère l'adsorbant de l'étape a) à l'aide du gaz de régénération chauffé à l'étape c),
e) on stoppe la circulation du gaz de régénération chauffé à l'étape c) sur l'adsorbant de l'étape a),
caractérisé en ce qu'après l'étape e) on met en oeuvre au moins l'une des étapes supplémentaires suivantes :
i) on diminue la température de peau du réchauffeur d'au moins 25°C jusqu'à une température de peau T₁,
ii) on effectue une purge du réchauffeur.

Selon le cas, le procédé selon l'invention peut présenter l'une des caractéristiques suivantes :
- on utilise un réchauffeur électrique ou à fluide calorigène, en particulier à vapeur ; ici on met en oeuvre de préférence un réchauffeur à vapeur ;
- on met en oeuvre un réchauffeur à vapeur dont la pression de vapeur dans les étapes i) et/ou ii) est inférieure à la pression de vapeur mise en oeuvre dans l'étape de chauffage c) ;
- après l'étape e) on applique une pression de vapeur inférieure à 15 bar, de préférence inférieure à 8 bar, de préférence encore inférieure à 6 bar ;
- après l'étape ii), on effectue un balayage du réchauffeur ;
- la purge et/ou le balayage sont réalisés à l'aide d'un gaz, en particulier une fraction du gaz à chauffer ou une fraction gazeuse de composition différente du gaz à chauffer réactive ou non-réactive ; par gaz non réactif, on entend un gaz non susceptible de réagir avec le gaz de à chauffer ou au contact de la surface chaude des tubes ou des plaques d'échange, c'est-à-dire non susceptible de créer de nouvelles espèces initialement non présentes dans le gaz à chauffer ;
- on met en oeuvre uniquement l'étape supplémentaire ii) et en ce que la purge est réalisée à l'aide du gaz à chauffer juste avant le début de la prochaine étape de chauffage c);
- on met en oeuvre uniquement l'étape supplémentaire ii) suivie ou non d'un balayage et en ce que la purge et/ou le balayage sont réalisés à l'aide d'un gaz non-réactif ;
- le gaz non-réactif est choisi parmi l'hydrogène, l'azote ou le méthane ;
- après l'étape ii) on effectue une purge des liquides formés dans le réchauffeur ;
- la pression partielle de CO dans le gaz chauffé à l'étape c) est inférieure à 2 bars absolus, préférentiellement inférieure à 1 bar absolu, encore préférentiellement égale ou inférieure à 0,5 bar absolu ;
- le gaz d'alimentation contient au moins de l'hydrogène (H₂) et du monoxyde de carbone (CO) ;
- la teneur en hydrogène du gaz d'alimentation est comprise entre environ 30 et 75 % molaire et en ce que la teneur en monoxyde de carbone est comprise entre environ 25 et 60 % molaire ;
- le gaz d'alimentation est obtenu par reformage à la vapeur, par oxydation partielle, par gazéification du charbon ou de résidus, ou par des procédés mixtes ; par procédé mixte, on entend une combinaison du reformage à la vapeur et de l'oxydation partielle ;
- le gaz d'alimentation subit un prétraitement tel que lavage aux amines ou au méthanol avant d'être purifié.

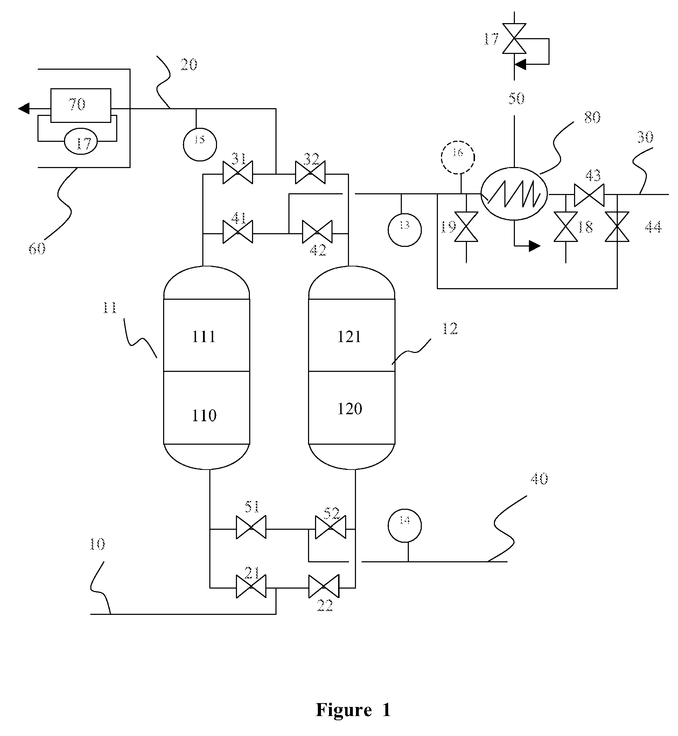

L'invention va maintenant être décrite plus en détail, en référence à la figure annexée FIG.1

La figure 1 décrit une unité d'épuration permettant la réalisation du procédé selon l'invention.

Le gaz de synthèse issu d'un lavage aux amines 10 est dirigé via la vanne 21 -vanne 22 fermée- vers l'adsorbeur 11 constitué d'un lit d'alumine activée 110 suivi d'un lit de zéolite 111 dans lesquels sont respectivement retenu l'eau et le CO₂ contenus dans le gaz de synthèse et le gaz produit ainsi épuré est dirigé vers la boite froide 60 via la vanne 31 -vanne 32 fermée puis est introduit dans l'échangeur cryogénique principal 70.

Le gaz de régénération, une fraction riche en hydrogène et renfermant du CO et du CH₄ est réchauffé pendant la phase de chauffage à travers le réchauffeur à vapeur 80 au moyen de vapeur moyenne pression 50. La température d'entrée dans l'adsorbeur 12 est régulée au moyen d'une sonde de température 13 et d'un circuit permettant au gaz entrant dans l'adsorbeur 12 par l'intermédiaire de la vanne 42 de ne pas traverser le réchauffeur 80. Ce circuit est contrôlé par la vanne 44. En fin d'étape de chauffage c), la vanne 43 est fermée et le gaz de régénération froid est dirigé vers l'adsorbeur 12 commençant à refroidir le lit de tamis 121 débarrassé du CO₂ précédemment adsorbé tout en poussant le front de chaleur résiduel à travers le lit d'alumine activée 120. Une sonde de température 14 sur le circuit d'évacuation du gaz de régénération 40 permet de contrôler le bon déroulement des étapes de chauffage et de refroidissement. Pendant la période de refroidissement et les autres étapes éventuelles au cours de laquelle le gaz de régénération n'est pas chauffé, voire pas utilisé telles que des étapes de mise en production en parallèle des adsorbeurs, l'alimentation vapeur est laissée ouverte sur l'échangeur. Cela permet, comme décrit précédemment d'éviter les chocs thermiques périodiques qu'entraineraient les coupures cycliques de l'alimentation en vapeur ainsi que de mettre rapidement le réchauffeur à son point de fonctionnement nominal.

Le réchauffeur de gaz de régénération est généralement en acier carbone comme dans le cas de l'unité décrite ici. Il peut être éventuellement en acier inox ou autres matériaux adaptés aux conditions de pression, température et nature des fluides.

Le détail du contrôle de l'unité ainsi que les étapes transitoires et les circuits correspondants permettant un fonctionnement stabilisé des unités à l'amont et à l'aval de l'unité d'épuration ne sont pas décrits ici par souci de simplification.

Les constituants principaux des gaz de synthèse qu'il est classique de traiter dans des unités de ce type, la teneur en hydrogène reste approximativement dans la fourchette 30 à 75% molaire et le monoxyde de carbone dans la fourchette 15 à 60% molaire.

En ce qui concerne les impuretés principales, le dioxyde de carbone (CO₂) peut varier entre 5 et 500 ppm molaire approximativement. Si la décarbonatation s'effectue par lavage aux amines, le gaz de synthèse est normalement saturé en eau. Dans le cas de lavage cryogénique aux alcools, on peut en trouver généralement entre 20 et 500 ppm molaire. Parmi les alcools, le méthanol est l'impureté la plus courante.

La pression du gaz de synthèse est généralement comprise entre 10 et 70 bars, de nombreuses unités fonctionnant cependant entre 15 et 50 bars.

La température est dans la plage 5 à 50°c, plus généralement entre 15 et 40°C dans le cas d'un lavage aux amines et dans la plage -70 à -20°C après un lavage aux alcools, généralement au méthanol. Dans ce dernier cas, il est possible aussi de réchauffer le gaz de synthèse et de faire une épuration à température ambiante.

Les débits de gaz de synthèse à épurer peuvent aller de quelques centaines de Nm³/h à plusieurs centaines de milliers de Nm³/h. L'unité particulière dont il est question traite un débit d'environ 60 000 Nm³/h.

Les adsorbeurs sont généralement de forme cylindrique avec axe vertical mais on peut utiliser d'autres types tels qu'adsorbeurs cylindriques à axe horizontal ou adsorbeurs radiaux.

Selon l'invention, il a été mis en évidence que la température de peau du réchauffeur après l'étape c) de chauffage du gaz de régénération jouait un rôle dans l'introduction d'impuretés dans la boîte froide.

En effet, dans l'état de la technique la température de peau est maintenue à une même valeur pendant toute la durée du cycle, y compris pendant l'étape de refroidissement. Pendant cette étape de refroidissement, la vanne 43 est fermée et la vanne 44 ouverte et le gaz de régénération froid est dirigé vers l'adsorbeur 12.

On a donc du gaz contenant de l'hydrogène et du monoxyde de carbone au contact de la surface chauffante.

Compte tenu du temps de contact de l'ordre de l'heure ou même de plusieurs heures, il peut donc se former des quantités appréciables d'eau, de CO₂ et éventuellement d'alcools divers et de chaînes carbonées saturées ou pas dans l'échangeur. Les principales réactions enjeu sont connues sous le nom de réaction de Fischer-Tropsch (FT) et du gaz à l'eau (Water Gas Shift en anglais).

Sans précaution particulière, pendant l'étape de refroidissement, on va donc créer dans le réchauffeur une quantité appréciable de ces contaminants: eau, CO₂ et autres constituants, par exemple des chaînes carbonées saturées ou pas, plus ou moins longues. Et divers alcools. Ces différentes impuretés sont entraînées vers l'adsorbant à régénérer au début du chauffage.

En se basant sur l'analyse du CO₂ formé dans le réchauffeur pendant la période de non chauffage, l'effet prépondérant de la température a pu être mis en évidence à la fois sur la quantité formée et la vitesse de formation du CO₂. La température favorise aussi la formation des chaînes carbonées et des alcools. L'eau est présente dans toutes les analyses.

Ces réactions sont très importantes pour des températures de 220°C ou supérieure, modérée autour de 200°C, faible à 175°C et en limite de détection au dessous de 150°C.

La mesure d'autres espèces que l'eau, en particulier du CO₂ à des teneurs de plusieurs dizaines de ppm, voire de centaines de ppm pour les températures les plus élevées ainsi que la présence d'alcools et d'hydrocarbures lourds permet d'exclure l'hypothèse de passage d'eau du circuit vapeur vers le circuit gaz, explication couramment retenue jusqu'à ce jour pour expliquer la présence d'eau parfois découverte dans le gaz de régénération après chauffage.

Compte tenu de la très grande affinité du tamis moléculaire pour l'eau et les produits polaires, une partie de cette eau se piège sur l'adsorbant malgré le niveau de température élevé. Lors de la phase d'adsorption, une partie de cette eau est ensuite entraînée vers la boîte froide par le gaz normalement épuré. Compte tenu de la température plus basse, de l'ordre de 40 à 45°C dans le cas de l'unité décrite plus haut, la teneur en équilibre avec l'adsorbant humidifié précédemment est très faible et se compte en dizaines de ppb. Cependant, il est possible avec ce type de teneur d'accumuler des kilogrammes d'impuretés dans la ligne d'échange et de détériorer au fil des jours les performances thermiques de l'appareil, voire de boucher à la longue la dite ligne d'échange.

La description ci-dessus a trait à l'eau mais d'autres composés présentant une affinité pour le tamis moléculaire peuvent se comporter de la même manière tels les alcools et hydrocarbures lourds ou insaturés.

Une autre partie des impuretés introduites lors du chauffage est entraînée par le gaz chaud vers le côté entrée de l'adsorbeur et pollue au passage la totalité du tamis. A l'équilibre, on a donc une unité avec un lit de tamis partiellement pollué avec de l'eau -ou d'autres impuretés-entrée côté production et des premières couches d'adsorbants probablement vieillies et/ou polluées par divers composés secondaires tels que ceux entraînés depuis les unités amont (amines..) ou par les produits de décomposition ou réaction de ces mêmes composés (acide formique...). On peut avoir simultanément une dégradation dans le temps des performances globales de la dite épuration conduisant par exemple à réduire la durée de la phase d'adsorption pour éviter la sortie de pics de CO₂ et une pollution progressive et constante de la boite froide par entraînement de traces d'eau et éventuellement de CO₂ formés dans le réchauffeur de régénération.

Dans le cadre de l'invention, on peut utiliser un réchauffeur à vapeur, un réchauffeur à fluide calorigène autre que la vapeur d'eau ou éventuellement un réchauffeur électrique pour chauffer le gaz de régénération. On utilise parfois deux réchauffeurs en série, un premier à vapeur basse pression ou à eau chaude suivi d'un réchauffeur électrique pour atteindre la température spécifiée. Le réchauffeur électrique ne peut être utilisé que périodiquement pour effectuer une régénération plus poussée.

Dans le cas d'un réchauffeur à vapeur, on diminue la température de peau en baissant la pression de vapeur. Pour cela, une solution est d'équiper l'entrée de vapeur (50), au niveau du réchauffeur (80), d'une vanne automatique (17) permettant de contrôler la pression de condensation dans ledit réchauffeur (80). Selon cette forme de réalisation de l'invention, pendant la phase de chauffage, c'est-à-dire lorsque le débit de régénération traverse le réchauffeur (80) - vanne (43) ouverte- le point de consigne de la vapeur est augmenté depuis une première valeur P1 jusqu'à sa valeur nominale Pch, supérieure à P1. Cette augmentation peut se faire directement ou par palier ou au moyen d'une rampe. Lorsque l'étape c) de chauffage du gaz de régénération est terminée, le point de consigne de la pression de la vapeur est ramené à sa valeur de "repos" P1. Cette baisse du point de consigne peut se faire en une fois, par paliers ou par une rampe.

Dans le cas d'un réchauffeur à fluide calorigène, on diminue la température de peau en diminuant la température du fluide calorigène.

Enfin, dans le cas d'un réchauffeur électrique, il s'agira de diminuer la température de peau des éléments chauffants en utilisant les moyens de régulations de température classiques de l'échangeur.

Afin de limiter la formation d'impuretés dans le réchauffeur de régénération, seule la mesure de cette température de peau est significative. En effet, en cas de non circulation du gaz à réchauffer, la température en un point de mesure quelconque de ce gaz immobile n'est pas représentative de l'état thermique à l'intérieur du réchauffeur.

D'autres moyens peuvent être utilisés à la place d'une baisse de la température de peau ou en complément de cette dernière.

En effet, la baisse de la température de peau du réchauffeur quand celui-ci est à vapeur, ce qui est très généralement le cas, correspond à une diminution de la pression de la vapeur dans l'échangeur. Cette diminution peut être limitée par la pression nécessaire à l'évacuation des condensats. Des variations de température cycliques trop importantes pourraient également nuire à l'intégrité mécanique de l'échangeur au cours du temps.

Ces autres moyens permettent d'éviter que les différents constituants formés dans le réchauffeur à vapeur, pendant qu'il n'est pas en service (c'est-à-dire entre deux étapes i)), ne soient ensuite envoyés vers les adsorbeurs lorsque, en début de chauffage, le gaz de régénération est introduit à nouveau dans le réchauffeur ou bien permettent d'éviter ou de limiter la formation des dits constituants.

Ces moyens peuvent consister à purger le réchauffeur après l'étape e) -et avant le début de l'étape de chauffage c) suivante- et à évacuer le gaz vers la torche ou tout autre circuit pour lequel la présence des constituants créés en son sein ne constitue aucun problème particulier. Il s'agit de remplacer le gaz initial par un autre gaz. Pour cela, on peut mettre 1 à 5 fois le volume de gaz que peut contenir le réchauffeur. On notera qu'il est préférable de mettre plus d'une fois le volume de gaz du réchauffeur car le remplacement s'effectue rarement sans mélange entre le gaz initial et le gaz de purge. Il est également possible de purger le réchauffeur du gaz qu'il contient en le dépressurisant jusqu'en basse pression. On peut aussi mettre en oeuvre ces deux moyens, successivement par exemple en dépressurisant l'échangeur dans un premier temps et introduisant à nouveau du gaz pour le repressuriser.

D'autre part, cette purge, si elle n'a pas lieu juste avant l'étape de chauffage c) suivante, peut être suivie d'un balayage. Par balayage, on entend la mise en circulation d'un débit de gaz généralement plus faible que le débit de purge mais sur une période plus longue. En général, le débit de balayage est largement inférieur au débit du gaz chauffé à l'étape c).

Ce balayage ou cette purge peut se faire via les vannes 18 et 19 représentées sur la figure 1. Ils peuvent se faire également par du gaz traversant la vanne 43 gardée ouverte ou seulement partiellement fermée et évacué via la vanne 19. Ce balayage ou cette purge peuvent se faire conjointement avec la baisse du point de consigne de la température de peau (ou de la pression de la vapeur dans le cas d'un réchauffeur à vapeur) décrite précédemment.

On notera qu'un prélèvement du gaz au sein, en entrée ou en sortie de l'échangeur, telle une boucle rapide d'analyse, peut constituer un moyen de balayage entrant dans le cadre de la présente invention dès lors en particulier que le débit de gaz prélevé modifie la teneur en impuretés au niveau de l'échangeur. Cela peut se vérifier en modifiant d'un cycle sur l'autre, le débit de gaz prélevé ou la durée de la période d'analyse.

Cette purge et/ou ce balayage peut être réalisée à l'aide d'un gaz contenant également de l'hydrogène et du monoxyde de carbone, en particulier par le gaz de régénération lui-même, ou par un gaz non susceptible de réagir au contact de la surface chaude des tubes ou des plaques d'échange. On appellera ce type de gaz un gaz non réactif Ce gaz de purge peut-être de l'hydrogène, tel que produit par exemple par un PSA H₂, ou de l'azote ou du méthane. Ces fluides peuvent être prélevés sur un réseau à proximité (azote d'inertage par exemple) ou être un fluide de l'unité de séparation cryogénique.

Si on utilise comme gaz de purge le gaz à réchauffer lui-même, on effectuera cette purge préférentiellement juste avant de débuter l'étape d), c'est à dire juste avant d'envoyer du gaz chaud ayant traversé le réchauffeur vers l'adsorbeur à régénérer.

Dans le cas où l'on met en oeuvre une purge du réchauffeur avec un gaz non réactif, cette purge peut s'effectuer par exemple juste après la fin de l'étape e) et être suivie d'un balayage avec ce même gaz non réactif, balayage qui peut s'effectuer pendant toute la durée comprise entre la fin de purge et la prochaine étape c).

A nouveau, cette purge ou balayage peut se faire conjointement avec une baisse du point de consigne de la pression de la vapeur.

Le réchauffeur-et/ou ses tubulures d'entrée / sortie- peut également être équipé d'un moyen de purge des liquides éventuellement formés entre deux étapes successives de chauffage pour faciliter leur évacuation.

Toutes ces opérations (purge, balayage, purge des liquides..) peuvent bien sûr être automatisées et faire partie intégrante du cycle de fonctionnement du procédé de purification ou de séparation selon l'invention.

## Revendications

1. Procédé de purification ou de séparation d'un flux de gaz d'alimentation contenant au moins une impureté, dans lequel périodiquement :
a) on met en contact ledit flux de gaz d'alimentation avec un premier adsorbant pour éliminer par adsorption au moins ladite impureté,
b) on récupère ledit gaz purifié ou séparé,
c) on chauffe un gaz de régénération contenant au moins de l'hydrogène (H₂) et du monoxyde de carbone (CO) au moyen d'un réchauffeur dont la température de peau T₂ est supérieure à 150°C,
d) on régénère l'adsorbant de l'étape a) à l'aide du gaz de régénération chauffé à l'étape c),
e) on stoppe la circulation du gaz de régénération chauffé à l'étape c) sur l'adsorbant de l'étape a),
**caractérisé en ce qu'**après l'étape e) on met en oeuvre au moins l'une des étapes supplémentaires suivantes :
i) on diminue la température de peau du réchauffeur d'au moins 25°C jusqu'à une température de peau T₁,
ii) on effectue une purge du réchauffeur.

2. Procédé selon la revendication 1, **caractérisé en ce qu'**on utilise un réchauffeur électrique ou à fluide calorigène, en particulier à vapeur.

3. Procédé selon l'une des revendications 1 ou 2, **caractérisé en ce que** l'on met en oeuvre un réchauffeur à vapeur dont la pression de vapeur dans les étapes i) et/ou ii) est inférieure à la pression de vapeur mise en oeuvre dans l'étape de chauffage c).

4. Procédé selon la revendication 3, **caractérisé en ce qu'**après l'étape e) on applique une pression de vapeur inférieure à 15 bar, de préférence inférieure à 8 bar, de préférence encore inférieure à 6 bar.

5. Procédé selon l'une des revendications précédentes, **caractérisé en ce qu'**après l'étape ii), on effectue un balayage du réchauffeur.

6. Procédé selon l'une des revendications précédentes, **caractérisé en ce que** la purge et/ou le balayage sont réalisés à l'aide d'un gaz, en particulier une fraction du gaz à chauffer ou une fraction gazeuse de composition différente du gaz à chauffer réactive ou non-réactive.

7. Procédé selon l'une des revendications 1 à 3 ou 6, **caractérisé en ce que** l'on met en oeuvre uniquement l'étape supplémentaire ii) et **en ce que** la purge est réalisée à l'aide du gaz à chauffer juste avant le début de la prochaine étape de chauffage c).

8. Procédé selon l'une des revendications 1, 2, 3, 5 ou 6, **caractérisé en ce que** l'on met en oeuvre uniquement l'étape supplémentaire ii) suivie ou non d'un balayage et **en ce que** la purge et/ou le balayage sont réalisés à l'aide d'un gaz non-réactif..

9. Procédé selon l'une des revendications 6 ou 8, **caractérisé en ce que** le gaz non-réactif est choisi parmi l'hydrogène, l'azote ou le méthane.

10. Procédé selon l'une des revendications précédentes, **caractérisé en ce qu'**après l'étape ii) on effectue une purge des liquides formés dans le réchauffeur.

11. Procédé selon l'une des revendications précédentes, **caractérisé en ce que** la pression partielle de CO dans le gaz de régénération chauffé à l'étape c) est inférieure à 2 bars absolus, préférentiellement inférieure à 1 bar absolu, encore préférentiellement égale ou inférieure à 0,5 bar absolu.

12. Procédé selon l'une des revendications précédentes, **caractérisé en ce que** le gaz d'alimentation contient au moins de l'hydrogène (H₂) et du monoxyde de carbone (CO).

13. Procédé selon l'une des revendications précédentes, **caractérisé en ce que** la teneur en hydrogène du gaz d'alimentation est comprise entre environ 30 et 75 % molaire et **en ce que** la teneur en monoxyde de carbone est comprise entre environ 25 et 60 % molaire.

14. Procédé selon l'une des revendications précédentes, **caractérisé en ce que** le gaz d'alimentation est obtenu par reformage à la vapeur, par oxydation partielle, par gazéification du charbon ou de résidus, ou par des procédés mixtes.

15. Procédé selon l'une des revendications précédentes, **caractérisé en ce que** le gaz d'alimentation subit un prétraitement tel que lavage aux amines ou au méthanol avant d'être purifié.

## Patentansprüche

1. Verfahren zur Reinigung oder zur Trennung eines Versorgungsgasflusses, enthaltend mindestens eine Verunreinigung, wobei in regelmäßigen Abständen:
a) der Versorgungsgasfluss mit einem ersten Adsorptionsmittel in Kontakt gebracht wird, um durch Adsorption mindestens die Verunreinigung zu entfernen,
b) das gereinigte oder getrennte Gas wiedergewonnen wird,
c) ein Regenerationsgas, enthaltend mindestens Wasserstoff (H₂) und Kohlenmonoxid (CO), mit Hilfe einer Heizvorrichtung erwärmt wird, deren Oberflächentemperatur T₂ über 150 °C liegt,
d) das Adsorptionsmittel von Schritt a) mit Hilfe des Regenerationsgases, erwärmt in Schritt c), regeneriert wird,
e) die Zirkulation des Regenerationsgases, das in Schritt c) erwärmt wird, auf dem Adsorptionsmittel von Schritt a) gestoppt wird,
**dadurch gekennzeichnet, dass** nach Schritt e) mindestens einer der folgenden zusätzlichen Schritte implementiert wird:
i) Verringern der Oberflächentemperatur der Heizvorrichtung um mindestens 25 °C bis auf eine Oberflächentemperatur T₁,
ii) Durchführen einer Entleerung der Heizvorrichtung.

2. Verfahren nach Anspruch 1, **dadurch gekennzeichnet, dass** eine elektrische Heizvorrichtung oder mit Wärmeträgerfluid, insbesondere Dampf, verwendet wird.

3. Verfahren nach einem der Ansprüche 1 oder 2, **dadurch gekennzeichnet, dass** eine Heizvorrichtung mit Dampf implementiert wird, deren Dampfdruck in den Schritten i) und/oder ii) geringer als der Dampfdruck ist, der im Heizschritt c) implementiert wird.

4. Verfahren nach Anspruch 3, **dadurch gekennzeichnet, dass** nach dem Schritt e) ein Dampfdruck angewendet wird, der geringer als 15 bar, vorzugsweise geringer als 8 bar, noch bevorzugter geringer als 6 bar ist.

5. Verfahren nach einem der vorhergehenden Ansprüche, **dadurch gekennzeichnet, dass** nach dem Schritt ii) eine Spülung der Heizvorrichtung durchgeführt wird.

6. Verfahren nach einem der vorhergehenden Ansprüche, **dadurch gekennzeichnet, dass** die Entleerung und/oder die Spülung mit Hilfe eines Gases realisiert werden, insbesondere einer Fraktion des zu erwärmenden Gases oder einer gasförmigen Fraktion mit verschiedener Zusammensetzung des reaktiven oder nicht reaktiven zu erwärmenden Gases.

7. Verfahren nach einem der Ansprüche 1 bis 3 oder 6, **dadurch gekennzeichnet, dass** ausschließlich der zusätzliche Schritt ii) implementiert wird, und dadurch, dass die Entleerung mit Hilfe des zu erwärmenden Gases direkt vor dem Beginn des nächsten Erwärmungsschritts c) realisiert wird.

8. Verfahren nach einem der Ansprüche 1, 2, 3, 4, 5 oder 6, **dadurch gekennzeichnet, dass** ausschließlich der zusätzliche Schritt ii) implementiert wird, gefolgt oder nicht gefolgt von einer Spülung und dadurch, dass die Entleerung und/oder die Spülung mit Hilfe eines nicht reaktiven Gases realisiert werden.

9. Verfahren nach einem der Ansprüche 6 oder 8, **dadurch gekennzeichnet, dass** das nicht reaktive Gas ausgewählt ist aus Wasserstoff, Stickstoff oder Methan.

10. Verfahren nach einem der vorhergehenden Ansprüche, **dadurch gekennzeichnet, dass** nach Schritt ii) eine Entleerung der Flüssigkeiten durchgeführt wird, die in der Heizvorrichtung gebildet werden.

11. Verfahren nach einem der vorhergehenden Ansprüche, **dadurch gekennzeichnet, dass** der Teildruck von CO im Regenerationsgas, das in Schritt c) erwärmt wird, geringer als 2 bar absolut ist, vorzugsweise geringer als 1 bar absolut, noch bevorzugter gleich wie oder geringer als 0,5 bar absolut.

12. Verfahren nach einem der vorhergehenden Ansprüche, **dadurch gekennzeichnet, dass** das Versorgungsgas mindestens Wasserstoff (H₂) und Kohlenmonoxid (CO) umfasst.

13. Verfahren nach einem der vorhergehenden Ansprüche, **dadurch gekennzeichnet, dass** der Wasserstoffgehalt des Versorgungsgases zwischen ungefähr 30 und 75 Mol-% liegt, und dadurch, dass der Kohlenmonoxidgehalt zwischen ungefähr 25 und 60 Mol-% liegt.

14. Verfahren nach einem der vorhergehenden Ansprüche, **dadurch gekennzeichnet, dass** das Versorgungsgas durch Dampfreformierung, durch teilweise Oxidation, durch Gasifizierung von Kohle- oder von Rückständen, oder durch gemischte Verfahren erhalten wird.

15. Verfahren nach einem der vorhergehenden Ansprüche, **dadurch gekennzeichnet, dass** das Versorgungsgas einer Vorbehandlung wie z.B. einer Waschung mit Aminen oder mit Methanol vor der Reinigung unterzogen wird.

## Claims

1. Method for the purification or separation of a flow of a feed gas containing at least one impurity, wherein periodically:
a) said flow of feed gas is placed in contact with a first adsorbent for removing via adsorption at least said impurity,
b) said purified or separated gas is recovered,
c) a regeneration gas is heated containing at least hydrogen (H₂) and carbon monoxide (CO) by means of a heater of which the surface temperature T₂ is higher than 150°C,
d) the adsorbent of the step a) is regenerated using the regeneration gas heated in the step c),
e) the circulation of the regeneration gas heated in the step c) is stopped on the adsorbent of the step a),
**characterised in that** after the step e) at least one of the following additional steps is implemented:
i) the surface temperature of the heater is decreased by at least 25°C until a surface temperature T₁,
ii) a purge of the heater is carried out.

2. Method according to claim 1, **characterised in that** an electric heater or a heater with calorigenic fluid is used, in particular with steam.

3. Method according to one of claims 1 or 2, **characterised in that** a steam heater is implemented of which the steam pressure in steps i) and/or ii) is lower than the steam pressure implemented in the step of heating c).

4. Method according to claim 3, **characterised in that** after the step e) a stem pressure lower than 15 bar is applied, preferably lower than 8 bar, and more preferably lower than 6 bar.

5. Method according to one of the preceding claims, **characterised in that** after the step ii), a sweeping of the heater is carried out.

6. Method according to one of the preceding claims, **characterised in that** the purging and/or the sweeping are carried out using a gas, in particular a fraction of the gas to be heated or a gaseous fraction of a composition different from the gas to be heated that is reactive or non-reactive.

7. Method according to one of claims 1 to 3 or 6, **characterised in that** only the additional step ii) is implemented and **in that** the purging is carried out using the gas to be heated just before the beginning of the next step of heating c).

8. Method according to one of claims 1, 2, 3, 5 or 6, **characterised in that** only the additional step ii) is implemented followed or not by a sweeping and **in that** the purging and/or the sweeping are carried out using a non-reactive gas.

9. Method according to one of claims 6 or 8, **characterised in that** the non-reactive gas is chosen from hydrogen, nitrogen or methane.

10. Method according to one of the preceding claims, **characterised in that** after the step ii) a purge of the liquids formed in the heater is carried out.

11. Method according to one of the preceding claims, **characterised in that** the partial pressure of CO in the regeneration gas heated in the step c) is less than 2 bars absolute, preferentially less than 1 bar absolute, and further preferentially less than or equal to 0.5 bar absolute.

12. Method according to one of the preceding claims, **characterised in that** the feed gas contains at least hydrogen (H₂) and carbon monoxide (CO).

13. Method according to one of the preceding claims, **characterised in that** the content in hydrogen of the feed gas is between about 30 and 75% molar and **in that** the content in carbon monoxide is between about 25 and 60% molar.

14. Method according to one of the preceding claims, **characterised in that** the feed gas is obtained by reforming with steam, by partial oxidation, by gasification of the coal or of residue, or by mixed methods.

15. Method according to one of the preceding claims, **characterised in that** the feed gas undergoes a pre-treatment such as washing with amines or with methanol before being purified.
